(19) Europäisches Patentamt
European Patent Office
Office européen des brevets

(11) EP 2 548 908 A1

(12) **EUROPÄISCHE PATENTANMELDUNG**

(43) Veröffentlichungstag:
**23.01.2013 Patentblatt 2013/04**

(51) Int Cl.:
***C08G 65/00*** *(2006.01)* ***C08G 64/00*** *(2006.01)*

(21) Anmeldenummer: **11174406.6**

(22) Anmeldetag: **18.07.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer MaterialScience AG**
**51373 Leverkusen (DE)**

(72) Erfinder:
- **Hofmann, Jörg Dr.**
  **41538 Dornmagen (DE)**
- **Gürtler, Christoph Dr.**
  **51368 Leverkusen (DE)**
- **Grasser, Stefan Dr.**
  **51377 Leverkusen (DE)**
- **Wolf, Aurel Dr.**
  **42489 Wülfrath (DE)**

(54) **Verfahren zur Herstellung von Polyetherpolyolen**

(57) Die vorliegende Erfindung betrifft ein Verfahren zur Herstellung von Polyethercarbonatpolyolen aus einer oder mehrerer H-funktionellen Startsubstanzen, einem oder mehreren Alkylenoxiden und Kohlendioxid in Gegenwart mindestens eines Doppelmetallcyanid (DMC)-Katalysators, wobei der Doppelmetallcyanid-Katalysator eine komplexbildende Komponente ausgewählt aus der Gruppe bestehend aus Polycarbonatdiol, Polyethercarbonatpolyol, Polyethylenglykoldiol und Poly (tetramethylenetherdiol) enthält.

EP 2 548 908 A1

## Beschreibung

Die vorliegende Erfindung betrifft ein Verfahren zur Herstellung von Polyethercarbonatpolyolen aus einer oder mehrerer H-funktionellen Startsubstanzen, einem oder mehreren Alkylenoxiden und Kohlendioxid in Gegenwart mindestens eines Doppelmetallcyanid (DMC)-Katalysators, wobei der Doppelmetallcyanid-Katalysator eine komplexbildende Komponente ausgewählt aus der Gruppe bestehend aus Polycarbonatdiol, Polyethercarbonatpolyol, Polyethylenglykoldiol und Poly(tetramethylenetherdiol) enthält.

Die Herstellung von Polyethercarbonatpolyolen durch katalytische Umsetzung von Alkylenoxiden (Epoxiden) und Kohlendioxid in An- oder Abwesenheit von H-funktionellen Startersubstanzen (Startern) wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion z.B. unter Verwendung einer H-funktionellen Starterverbindung ist in Schema (I) schematisch dargestellt, wobei R für einen organischen Rest wie Alkyl, Alkyaryl oder Aryl steht, der jeweils auch Heteroatome wie beispielsweise O, S, Si usw. enthalten kann, und wobei e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters kann aber variieren und ist nicht auf das in Schema (I) gezeigte Polyethercarbonatpolyol beschränkt. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Formel (I) gezeigte cyclische Carbonat (beispielsweise für R = $CH_3$ Propylencarbonat).

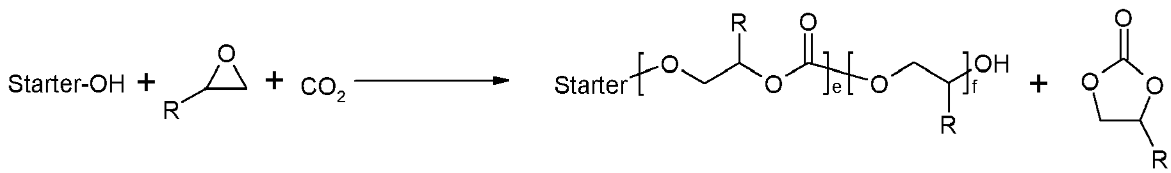

(I)

Als Aktivierung im Sinne der Erfindung wird ein Schritt bezeichnet, bei dem eine Teilmenge Alkylenoxidverbindung, gegebenenfalls in Gegenwart von $CO_2$, zum DMC-Katalysator gegeben wird und dann die Zugabe der Alkylenoxidverbindung unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Auftreten der Wärmeentwicklung. Im Allgemeinen kann dem Aktivierungsschritt ein Schritt zum Trocknen des DMC-Katalysators und ggf. des Starters bei erhöhter Temperatur und/oder reduziertem Druck vorgelagert sein, wobei dieser Schritt der Trocknung nicht Teil des Aktivierungsschrittes im Sinne der vorliegenden Erfindung ist.

Die Bildung von Copolymeren aus Epoxiden (z.B. Propylenoxid) und Kohlendioxid ist seit langem bekannt. So beschreibt zum Beispiel US 4500704 die Copolymerisation von Kohlendioxid und Propylenoxid unter Verwendung von DMC-Katalysatoren. Hier wurden beispielsweise in einem Reaktor ausgehend von einer Startersubstanz und 12,3 g Propylenoxid (212 mmol) und einem Druck an Kohlendioxid von 48 bar nach 48 Stunden bei 35 °C 71% des Propylenoxids umgesetzt. Von den umgesetzten 150,5 mmol Propylenoxid reagierten 27 mmol (18 %) zum im Allgemeinen unerwünschten Nebenprodukt Propylencarbonat.

US 6762278 B2 befasst sich mit der Aufgabe, kristallinen Multimetallcyanid-Katalysatoren bereitzustellen, die in der Copolymerisation von Epoxiden und Kohlendioxid zu einem verbesserten Einbau von Kohlendioxid führen sollen. US 6762278 B2 offenbart Multimetallcyanid-Katalysatoren, die einen Gehalt von plättchenförmigen Partikeln von mindestens 30 Gew.-% aufweisen und als organische Komplex-Verbindung unter anderem Polyetheralkohole, die durch Polyaddition von Epoxiden an Alkohole entstehen, enthalten können.

Es war Aufgabe der vorliegenden Erfindung, ein Verfahren zur Herstellung von Polyethercarbonatpolyolen bereitzustellen, welches eine günstige Selektivität (d.h. niedriges Verhältnis von cyclischem Carbonat zu linearem Polyethercarbonat) aufweist.

Überraschend wurde gefunden, dass die zuvor genannte Aufgabe gelöst wird durch ein Verfahren zur Herstellung von Polyethercarbonatpolyolen aus einer oder mehreren H-funktionellen Startsubstanzen, eines oder mehrerer Alkylenoxiden und Kohlendioxid in Gegenwart eines DMC-Katalysators, dadurch gekennzeichnet, dass der Doppelmetallcyanid-Katalysator mindestens eine komplexbildende Komponente ausgewählt aus der Gruppe bestehend aus Polycarbonatdiol, Polyethercarbonatpolyol, Polyethylenglykoldiol und Poly(tetramethylenetherdiol) enthält.

Gegenstand einer bevorzugten Ausführungsform der Erfindung ist ein Verfahren zur Herstellung von Polyethercarbonatpolyolen aus einer oder mehreren H-funktionellen Startsubstanzen, eines oder mehrerer Alkylenoxiden und

Kohlendioxid in Gegenwart eines DMC-Katalysators, dadurch gekennzeichnet, dass der DMC-Katalysator mindestens eine komplexbildende Komponente ausgewählt aus der Gruppe bestehend aus Polycarbonatdiol, Polyethercarbonatpolyol, Polyethylenglykoldiol und Poly(tetramethylenetherdiol) enthält, wobei

(α) die H-funktionelle Startersubstanz oder ein Gemisch aus mindestens zwei H-funktionellen Startersubstanzen vorgelegt und gegebenenfalls Wasser und/oder andere leicht flüchtige Verbindungen durch erhöhte Temperatur und/oder reduziertem Druck entfernt werden ("Trocknung"), wobei der DMC-Katalysator der H-funktionellen Startersubstanz oder dem Gemisch von mindestens zwei H-funktionellen Startersubstanzen vor oder nach der Trocknung zugesetzt werden,

(β) zur Aktivierung eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) ein oder mehrere Alkylenoxide und Kohlendioxid zu der aus Schritt (β) resultierenden Mischung fortwährend dosiert werden ("Copolymerisation"), wobei die für die Copolymerisation eingesetzten Alkylenoxide gleich oder verschieden sein können von den bei Schritt (β) eingesetzten Alkylenoxiden.

Bei dem Schritt der Aktivierung (Schritt (β)) wird eine Teilmenge Alkylenoxidverbindung, gegebenenfalls in Gegenwart von $CO_2$, zum DMC-Katalysator gegeben, wobei aufgrund einer folgenden exothermen chemischen Reaktion eine Temperaturspitze ("Hotspot") und/oder ein Druckabfall im Reaktor beobachtet wird. Bei dem Schritt der Aktivierung des erfindungsgemäßen Verfahrens kann die Teilmenge Alkylenoxidverbindung auch ein oder mehrere Additiv A) enthalten, und der DMC-Katalyator kann mit einem oder mehrerer Additive A) und gegebenenfalls mit einem oder mehreren Metallsalz vermischt werden. Der Verfahrensschritt der Aktivierung ist die Zeitspanne von der Zugabe der Teilmenge an Alkylenoxidverbindung, gegebenenfalls in Gegenwart von $CO_{2,}$ zum DMC-Katalysator bis zum Hotspot. Im Allgemeinen kann dem Aktivierungsschritt ein Schritt zum Trocknen des DMC-Katalysators, gegebenenfalls ein oder mehreredes Additive A) und gegebenenfalls ein oder mehrere Metallsalze und gegebenenfalls des Starters durch erhöhte Temperatur und/oder reduziertem Druck vorgelagert sein, wobei dieser Schritt der Trocknung nicht Teil des Aktivierungsschrittes im Sinne der vorliegenden Erfindung ist.

Allgemein können für das erfindungsgemäße Verfahren **Alkylenoxide** (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden in Schritt (i) als Alkylenoxide Ethylenoxid und/oder Propylenoxid, insbesondere Propylenoxid eingesetzt.

Als geeignete **H-funktionelle Startsubstanz** können Verbindungen mit für die Alkoxylierung aktiven H-Atomen eingesetzt werden. Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$ , besonders bevorzugt ist -OH. Als H-funktionelle Startersubstanz wird beispielsweise eine oder mehrere Verbindungen ausgewählt aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine (z. B. sogenannte Jeffamine® von Huntsman, wie z. B. D-230, D-400, D-2000, T-403, T-3000, T-5000 oder entsprechende Produkte der BASF, wie z. B. Polyetheramin D230, D400, D200, T403, T5000), Polytetrahydrofurane (z. B. PolyTHF® der BASF, wie z. B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt.. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol., 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexan (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykol, Dibutylenglykol und Polybutylenglykol); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionelle Startersubstanzen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®- Baygal®-, PET®- und Polyether-Polyole der Bayer MaterialScience AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionelle Startersubstanzen können auch aus der Substanzklasse der Polyesterpolyole ausgewählt sein, insbesondere solchen mit einem Molekulargewicht Mn im Bereich von 200 bis 4500 g/mol. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Startersubstanzen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des weiteren können als H-funktionelle Startersubstanzen Polycarbonatpolyole (wie beispielsweise Polycarbonatdiole) eingesetzt werden, insbesondere solchen mit einem Molekulargewicht Mn im Bereich von 150 bis 4500 g/mol, vorzugsweise 500 bis 2500, die beispielsweise durch Umsetzung von Phosgen, Dimethylcarbonat, Diethylcarbonat oder Diphenylcarbonat und di- und/oder polyfunktionellen Alkoholen oder Polyesterpolyolen oder Polyetherpolyolen hergestellt werden. Beispiele zu Polycarbonatpolyolen finden sich z. B. in der EP-A 1359177. Beispielsweise können als Polycarbonatdiole die Desmophen® C-Typen der Bayer MaterialScience AG verwendet werden, wie z. B. Desmophen® C 1100 oder Desmophen® C 2200.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren nach Schritt (i) oder nach Schritt (ii) oder nach Schritt (iii) erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atome pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole der allgemeinen Formel (II),

$$HO\text{-}(CH_2)_x\text{-}OH \qquad \text{(II)}$$

wobei x eine Zahl von 1 bis 20, bevorzugt eine gerade Zahl von 2 bis 20 ist. Beispiele für Alkohole gemäß Formel (II) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin, Pentaerythrit, Umsetzungsprodukte der Alkohole gemäß Formel (II) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Startsubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt ein zahlenmittleres Molekulargewicht Mn im Bereich von 62 bis 4500 g/mol und eine Funktionalität von 2 bis 3 und insbesondere ein Molekulargewicht Mn im Bereich von 62 bis 3000 g/mol und eine Funktionalität von 2 bis 3.

Die Herstellung der Polyethercarbonatpolyole erfolgt durch katalytische Anlagerung von Kohlendioxid und Alkylenoxiden an H-funktionellen Startersubstanzen. Unter "H-funktionell" wird im Sinne der Erfindung die Anzahl an für die Alkoxylierung aktiven H-Atomen pro Molekül der Starterverbindung verstanden.

DMC-Katalysatoren zur Verwendung in der Homopolymerisation von Epoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität in der Homopolymerisation von Epoxiden und ermöglichen die Herstellung von Polyetherpolyolen bei sehr geringen Katalysatorkonzentrationen (25 ppm oder weniger), so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die DMC-Katalysatoren werden erhalten, indem man

(a) im ersten Schritt eine wässrige Lösung eines Metallsalzes mit der wässrigen Lösung eines Metallcyanidsalzes in Gegenwart eines oder mehrer organischen Komplexliganden, z.B. eines Ethers oder Alkohols, umsetzt,

(b) wobei im zweiten Schritt der Feststoff aus der aus (i) erhaltenen Suspension durch bekannte Techniken (wie Zentrifugation oder Filtration) abgetrennt wird,

(c) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(d) wobei anschließend der erhaltene Feststoff, gegebenenfalls nach Pulverisierung, bei Temperaturen von im allgemeinen 20 - 120°C und bei Drücken von im allgemeinen 0,1 mbar bis Normaldruck (1013 mbar) getrocknet wird,

und wobei im ersten Schritt oder unmittelbar nach der Ausfällun g der Doppelmetallcyanidverbindung (zweiter Schritt) ein oder mehrere organische Komplexliganden, vorzugsweise im Überschuss (bezogen auf die Doppelmetallcyanidverbindung) und mindestens eine komplexbildende Komponente zugesetzt werden, dadurch gekennzeichnet, dass die komplexbildende Komponente ausgewählt ist aus mindestens einer der Gruppe bestehend aus Polycarbonatdiol, Polyethercarbonatpolyol, Polyethylenglykoldiol und Poly(tetramethylenetherdiol).

Die in den DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) sowie Polycarbonatdiol, Polyethercarbonatpolyol, Polyethylenglykoldiol oder Poly(tetramethylenetherdiol) zur gebildeten Suspension gegeben.

Zur Herstellung der Doppelmetallcyanid-Verbindungen geeignete Metallsalze besitzen bevorzugt die allgemeine Formel (III),

$M(X)_n$ (III)

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (IV),

$M_r(X)_3$ (IV)

wobei

M ausgewählt ist aus den Metallkationen $Fe^{3+}$, $Al^{3+}$, $Co^{3+}$ und $Cr^{3+}$,
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (V),

$M(X)_s$ (V)

wobei

M ausgewählt ist aus den Metallkationen $Mo^{4+}$, $V^{4+}$ und $W^{4+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (VI),

$M(X)_t$ (VI)

wobei

M ausgewählt ist aus den Metallkationen $Mo^{6+}$ und $W^{6+}$
X sind ein oder mehrere (d.h.verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VII)

$$(Y)_a\, M'(CN)_b\, (A)_c \qquad (VII)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),

A ausgewählt ist aus einem oder mehreren Anionen der Gruppe bestehend aus Halogenide (d..h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den DMC-Katalysatoren enthalten sind, sind Verbindungen der allgemeinen Formel (VIII)

$$M_x[M'_{x'},((CN)_y]_z \qquad (VIII),$$

worin M wie in Formel (III) bis (VI) und

M' wie in Formel (VII) definiert ist, und

x, x', y und z sind ganzzahlig und so gewählt, dass die Elektronenneutralität der Doppelmetallcyanidverbindung gegeben ist.

Vorzugsweise ist

x = 3, x' = 1, y = 6 und z = 2,

M = Zn(II), Fe(II), Co(II) oder Ni(II) und

M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Im Sinne der Erfindung werden bei der Herstellung der DMC-Katalysatoren eine oder mehrere komplexbildende Komponente(n) aus den Verbindungsklassen der Polycarbonatdiole, Polyethercarbonatpolyole, Polyethylenglykoldiole und Poly(tetramethylenetherdiol) eingesetzt. In bevorzugter Ausführungsform wird als komplexbildende Komponente eingesetzt:

A) Poly(tetramethylenetherdiol) mit einer Molmasse von 500 bis 5000 g/mol, besonders bevorzugt von 550 bis 1500 g/mol,
B) Polyethylenglykoldiol mit einer Molmasse von 500 bis 2500 g/mol, besonders bevorzugt von 600 bis 1500 g/mol,
C) Polyethercarbonatpolyol mit einer Molmasse von 500 bis 5000 g/mol, besonders bevorzugt von 1000 bis 3000 g/mol, und/oder
D) Polycarbonatdiol mit einer Molmasse von 500 bis 5000 g/mol, besonders bevorzugt von 1000 bis 3000 g/mol.

Poly(tetramethylenetherdiole) A) im Sinne der Erfindung sind Polyetherpolyole auf Basis von Tetramethylenetherglykol, auch Polytetrahydrofuran (PTHF) bzw. Polyoxybutylenglykol genannt. Diese Poly(tetramethylenetherdiole) weisen eine Hydroxylfunktionalität von zwei auf, d.h. diese enthalten zwei OH-Gruppen pro Molekül. Diese können beispielsweise mittels kationischer Polymerisation von Tetrahydrofuran (THF) mit Hilfe von Katalysatoren hergestellt werden. Als Katalysatoren werden dabei entweder vorgeformte Katalysatoren verwendet, oder die Katalysatoren werden in situ im Reaktionsgemisch erzeugt. Dies geschieht dadurch, dass im Reaktionsmedium mit Hilfe starker Lewis-Säuren (z.B. Bortrichlorid, Aluminiumchlorid, Zinntetrachlorid, Antimonpentachlorid, Eisen(III)chlorid oder Phosphorpentafluorid) oder mittels starker Brönsted-Säuren, (wie Perchlorsäure, Tetrafluoroborsäure, Fluorsulfonsäure, Chlorsulfonsäure, Hexachlorozinnsäure, Iodsäure oder Hexachloroantimon(V)säure) und mit Hilfe von als Promotoren bezeichneten reaktiven Verbindungen (wie Alkylenoxiden, z.B. Ethylenoxid, Propylenoxid, Epichlorhydrin oder Butylenoxid, Oxetanen, Orthoestern, Acetalen, $\alpha$-Halogenethern, Benzylhalogeniden, Triarylmethylhalogeniden, Säurechloriden, $\beta$-Lactonen, Carbonsäureanhydriden, Thionylchlorid, Phosphoroxychlorid oder Sulfonsäurehalogeniden), Oxoniumionen erzeugt werden, die die Polymerisation des THF initiieren.

Technisch lässt sich PTHF einstufig durch THF-Polymerisation mit Wasser, 1,4-Butandiol oder mit niedermolekularem PTHF als Telogen (Kettenabbruchsreagenz) an sauren Katalysatoren herstellen. Als Katalysatoren sind sowohl homogene, im Reaktionssystem gelöste Systeme als auch heterogene, d. h. weitgehend ungelöste Systeme, bekannt. Nachteilig sind jedoch die relativ geringen THF-Umsätze, die vor allem bei der Synthese von PTHF des Molekulargewichts 650 bis 3000 erreicht werden. Großtechnisch werden überwiegend zweistufige Verfahren durchgeführt, bei denen THF z.B. in Gegenwart von Fluorsulfonsäure zunächst zu Polytetrahydrofuran-Estern polymerisiert und anschließend zu PTHF hydrolysiert wird. Üblicherweise werden bei dieser Form der THF-Polymerisation höhere THF-Umsätze als bei einstufigen Verfahren erzielt. Vorteilhaft ist vor allem die THF-Polymerisation in Gegenwart von Carbonsäureanhydriden, wie z.B. Acetanhydrid in Gegenwart saurer Katalysatoren zu PTHF-Diacetaten und die anschließende Umesterung der PTHF-Diacetate z.B. mit Methanol zu PTHF und Methylacetat. Derartige Polytetrahydrofurane sind kommerziell verfügbar, z.B. von BASF SE unter dem Markennamen PolyTHF® oder von INVISTA unter dem Markennamen Terathane®.

Polyethylenglykoldiole B) im Sinne der Erfindung sind Polyetherpolyole auf Basis einer H-funktionellen Startersubstanz mit zwei für die Alkoxylierung aktiven H-Atomen sowie von Ethylenoxid. Die Herstellung solcher reiner Ethylenoxid-Polyetherdiole erfolgt in der Regel durch ringöffnende Polymerisation von Ethylenoxid (Oxiran) mit Katalysatoren. Hierzu verwendet man als Katalysatoren beispielsweise Lewis-Säuren (z. B. Bortrifluorid, Zinntetrachlorid, Zinkdichlorid) oder basische Verbindungen wie Alkylzink- oder Alkylaluminium-Verbindungen, Strontium- oder Calciumcarbonat, Calciumamid, Calciumamidalkoxid, Alkali- oder Erdalkalimetallhydroxiden, Alkanolaten oder Phenolaten. Als H-funktionelle Startersubstanz wird beispielsweise ein zweiwertiger Alkohol wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis-(hydroxymethyl)-cyclohexan (wie beispielweise 1,4-Bis-(hydroxymethyl)cyclohexan), Triethylenglykol, Tetraethylenglykol, Polyethylenglykol, Dipropylenglykol, Tripropylenglykol, Polypropylenglykol, Dibutylenglykol und Polybutylenglykol eingesetzt. Methoden zur Herstellung von Ethylenoxid-Polyethern sind dem Fachmann gut bekannt und beispielsweise ausführlich beschrieben in "Houben-Weyl, Methoden der organischen Chemie", Band 14/2, Makromolekulare Stoffe, 4. Auflage, 1963, S. 425-453, "Houben-Weyl, Methoden der organischen Chemie", Band E20, Makromolekulare Stoffe, 4. Auflage, 1987, S. 1367-1368 und "Encyclopedia of Polymer Science and Engineering", Vol. 6, 2nd Edition, 1987, S. 225-230 und 234-254.

Polyethercarbonatpolyole C) im Sinne der Erfindung sind beispielsweise erhältlich durch katalytische Umsetzung von Alkylenoxiden und Kohlendioxid in Anwesenheit von H-funktionellen Startersubstanzen, beispielsweise nach dem erfindungsgemäßen Verfahren. Die als komplexbildende Komponente eingesetzten Polyethercarbonatpolyole C) können auch über andere dem Fachmann bekannte Verfahren hergestellt werden, beispielsweise durch partielle Alkoholyse von Polycarbonatpolyolen mit di- oder trifunktionellen Hydroxyverbindungen. Die als komplexbildende Komponente eingesetzten Polyethercarbonatpolyole C) weisen vorzugsweise eine mittlere HydroxylFunktionalität von 1 bis 6 auf, besonders bevorzugt von 2 bis 3, höchst bevorzugt von zwei auf.

Polycarbonatdiole D) im Sinne der Erfindung sind beispielsweise erhältlich durch Polykondensation von difunktionellen Hydroxyverbindungen (im allgemeinen Bishydroxyverbindungen wie Alkandiolen oder Bisphenolen) mit Kohlensäure-Derivaten, wie z. B. Phosgen oder Bis-[chlorcarbonyloxy]-Verbindungen (beispielsweise der Formel Cl-C(=O)-O-$CH_2$-O-C(=O)-Cl), Kohlensäurediestern (wie Diphenylcarbonat oder Dimethylcarbonat) oder Harnstoff. Methoden zur Herstellung von Polycarbonaten sind allgemein gut bekannt und beispielsweise ausführlich beschrieben in "Houben-Weyl, Methoden der organischen Chemie", Band E20, Makromolekulare Stoffe, 4. Auflage, 1987, S. 1443-1457, "Ullmann's Encyclopedia of Industrial Chemistry", Volume A21,5th Edition, 1992, S. 207-215 und "Encyclopedia of Polymer Science and Engineering", Volume 11, 2nd Edition, 1988, S. 648-718. Besonders bevorzugt eingesetzt werden aliphatische Polycarbonat-Diole mit einer Molmasse von 500 bis 5000 g/mol, höchst bevorzugt von 1000 bis 3000 g/mol. Diese werden im allgemeinen aus nicht-vicinalen Diolen durch Umsetzung mit Diarylcarbonat, Dialkylcarbonat, Dioxolanonen, Phosgen, Bischlorkohlensäureestern oder Harnstoff erhalten (siehe z. B. EP-A 292 772 und die darin zitierten Dokumente). Als nicht-vicinale Diole kommen hierzu insbesondere 1,4-Butandiol, Neopentylglykol, 1,5-Pentandiol, 2-Methyl-1,5-pentandiol, 3-Methyl-1,5-pentandiol, 1,6-Hexandiol, Bis-(6-hydroxyhexyl)ether, 1,7-Heptandiol, 1,8-Octandiol, 2-Methyl- 1,8-octandiol, 1,9-Nonandiol, 1,10-Decandiol, 1,4-Bishydroxymethylcyclohexan, Diethylenglykol, Triethylenglykol, Tetraethylenglykol, Dipropylenglykol, Tri-propylenglykol, Tetrapropylenglykol, Oxalkylierungsprodukte von Diolen mit Ethylenoxid und/oder Propylenoxid und/oder Tetrahydrofuran mit Molmassen bis 1000 g/mol, vorzugsweise 200-700 g/mol, sowie in selteneren Fällen die sogenannten "Dimerdiole", die durch Reduktion beider Carboxyl-Gruppen der sogenannten "Dimersäuren" zugänglich sind, welche ihrerseits durch Dimerisation von ungesättigten pflanzlichen Fettsäuren erhältlich sind, in Betracht. Die nicht-vicinale Diole können einzeln oder in Mischungen eingesetzt werden. Die Umsetzung kann durch Basen oder Übergangsmetallverbindungen in dem Fachmann bekannter Weise katalysiert werden.

Das zahlenmittlere Molekulargewicht (auch Molmasse bezeichnet) wurde aus der experimentell ermittelten OH-Zahl berechnet.

Bevorzugt werden bei der Herstellung der DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz, also mindestens ein molares Verhältnis von Metallsalz zu Metallcyanidsalz von 2,25 zu 1,00.) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält. Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Im Sinne der Erfindung wird die im ersten Schritt gebildete Suspension anschließend mit mindestens einer komplexbildenden Komponente behandelt. Die komplexbildende Komponente wird dabei bevorzugt in einer Mischung mit Wasser und organischem Komplexligand eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem Katalysator entfernt werden. Bevorzugt liegt die Menge des organischen Komplexliganden in der wässrigen Waschlösung zwischen 40 und 80 Gew.-%, bezogen auf die Gesamtlösung. Besonders bevorzugt wird im dritten Schritt der wässrigen Waschlösung mindestens eine komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (c-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (c-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und mindestens einer komplexbildender Komponente (bevorzugt im Bereich zwischen 0,5 und 5 Gew.-%, bezogen auf die Gesamtmenge der Waschlösung des Schrittes (c-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 bis 100°C und bei Drücken von im allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startverbindung basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Polydispersität, Funktionalität und/oder Hydroxylzahl erfüllen müssen.

Zur Herstellung der Polyurethanweichschaumstoffe werden die Reaktionskomponenten nach dem an sich bekannten Einstufenverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben. Die Polyurethanweichschaumstoffe können als Form- oder auch als Blockschaumstoffe hergestellt werden. Die Polyurethanweichschaumstoffe finden beispielsweise Anwendung in der Möbelpolsterungen, Textileinlagen, Matratzen, Automobilsitze, Kopfstützen, Armlehnen, Schwämme und Bauelementen.

## Beispiele

Die OH-Zahl (Hydroxylzahl) wurde in Anlehnung an DIN 53240-2 bestimmt, wobei jedoch Pyridin anstelle von THF/Dichlormethan als Lösungsmittel verwendet wurde. Es wurde mit 0,5 molarer ethanolischer KOH titriert (Endpunktserkennung mittels Potentiometrie). Als Prüfsubstanz fungierte Rizinusöl mit durch Zertifikat festgelegter OH-Zahl. Die Angabe der Einheit in "mg/g" bezieht sich auf mg[KOH]/g[Polyethercarbonatpolyol].

Der Anteil an eingebautem $CO_2$, im resultierenden Polyethercarbonatpolyol sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm, das als Startermolekül eingebaute 1,8 Octandiol mit einer Resonanz bei 1,6 bis 1,52 ppm.

Der Molenanteil des im Polymer eingebauten Carbonats in der Reaktionsmischung wird nach Formel (XI) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter)

Unter Berücksichtigung der relativen Intensitäten wurde gemäß der folgenden Formel (IX) für das polymer gebundene Carbonat ("lineares Carbonat" LC) in der Reaktionsmischung in mol% umgerechnet:

$$LC = \frac{F(5{,}1-4{,}8) - F(4{,}5)}{F(5{,}1\text{-}4{,}8) + F(2{,}4) + 0{,}33 * F(1{,}2\text{-}1{,}0) + 0{,}25 * F(1{,}6\text{-}1{,}52)} * 100 \qquad (IX)$$

Der Gewichtsanteil (in Gew.-%) polymer-gebundenen Carbonats (LC') in der Reaktionsmischung wurde nach Formel (X) berechnet,

$$LC' = \frac{[F(5{,}1-4{,}8) - F(4{,}5)] * 102}{N} * 100\% \qquad (X)$$

wobei sich der Wert für N ("Nenner" N) nach Formel (XI) berechnet:

$$N = [F(5{,}1-4{,}8) - F(4{,}5)] * 102 + F(4{,}5) * 102 + F(2{,}4) * 58 + 0{,}33 * F(1{,}2-1{,}0) * 58 + 0{,}25 * F(1{,}6-1{,}52) * 146 \qquad (XI)$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol.

Der Gewichtsanteil (in Gew.-%) an cyclischem Carbonat (CC') in der Reaktionsmischung wurde nach Formel (XII) berechnet,

$$CC' = \frac{F(4{,}5) * 102}{N} * 100\% \qquad (XII)$$

wobei sich der Wert für N nach Formel (XI) berechnet.

Um aus den Werten der Zusammensetzung der Reaktionsmischung die Zusammensetzung bezogen auf den Polymer-Anteil (bestehend aus Polyetherpolyol, welches aus Starter und Propylenoxid während der unter $CO_2$-freien Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf den Anteil des Polyethercarbonatpolyol-Moleküls, das bei der Copolymerisation und ggf. den Aktivierungsschritten in Gegenwart von $CO_2$ gebildet wurde (d.h. der Anteil des Polyethercarbonatpolyol-Moleküls, der aus dem Starter (1,8-Octandiol) sowie aus der Reaktion des Starters mit Epoxid resultiert, das unter $CO_2$-freien Bedingungen zugegeben wurde, wurde hierbei nicht berücksichtigt)..

Eingesetzte komplexbildende Komponente

K-1: difunktionelles Polypropylenglykol mit einer Molmasse von 1000 g/mol
K-2: Poly(tetramethylenetherdiol) mit einer Molmasse von 650 g/mol
K-3: Polyethylenglykoldiol mit einer Molmasse von 1000 g/mol
K-4: Polycarbonatdiol mit einer Molmasse von 2000 g/mol, basierend auf 1,6-Hexandiol als difunktionelle Hydroxyverbindung
K-5: Polycarbonatdiol mit einer Molmasse von 2000 g/mol, basierend auf einer Mischung aus 71,4 Gewichtsteilen 1,4-Butandiol und 28,6 Gewichtsteilen 1,6-Hexandiol als difunktionelle Hydroxyverbindungen

Bei der Molmasse handelt es sich im das zahlenmittlere Molekulargewicht, welches aus der experimentell ermittelten OH-Zahl berechnet wurde.

**Beispiel 1 (Vergleich): Katalysator Cat-1**

Der Katalysator wurde mit einer Apparatur gemäß Fig. 4 aus WO-A 01/39883 hergestellt.
In einem Schlaufenreaktor, der einen Strahldispergator gemäß Fig. 2 aus WO-A 01/39883 mit einer Bohrung (Durchmesser 0,7 mm) enthält, wurde eine Lösung aus 258 g Zinkchlorid in 937 g destilliertem Wasser und 135 g *tert*-Butanol bei 50°C zirkuliert. Hierzu wurde eine Lösung aus 26 g Kaliumhexacyanocobaltat (0,078 mol) in 332 g destilliertem Wasser zudosiert. Der Druckverlust im Strahldispergator betrug dabei 2,5 bar. Anschließend wurde die gebildete Dispersion 60 min bei 50°C und einem Druckverlust im Strahldispergator von 2,5 bar zirkuliert. Danach wurde eine Mischung aus 5,7 g *tert*-Butanol, 159 g destilliertem Wasser und 27,6 g komplexbildende Komponente K-1 zudosiert und die Dispersion dann 80 min bei 50°C und einem Druckverlust im Strahldispergator von 2,5 bar zirkuliert.
230 g der erhaltenen Dispersion wurden in einer Drucknutsche mit 20 $cm^3$ Filterfläche filtriert und anschließend mit einer Mischung aus 82 g *tert*-Butanol, 42,3 g destilliertem Wasser und 1,7 g komplexbildende Komponente K-1 gewaschen. Der gewaschene Filterkuchen wurde mechanisch zwischen 2 Streifen Filterpapier abgepresst und abschließend für 2 h bei 60°C im Hochvakuum bei ca. 0,05 bar (absolut) getrocknet.

**Beispiel 2: Katalysator Cat-2**

Der Katalysator wurde mit einer Apparatur gemäß Fig. 4 aus WO-A 01/39883 hergestellt.
In einem Schlaufenreaktor, der einen Strahldispergator gemäß Fig. 2 aus WO-A 01/39883 mit einer Bohrung (Durchmesser 0,7 mm) enthält, wurde eine Lösung aus 258 g Zinkchlorid in 937 g destilliertem Wasser und 135 g *tert*-Butanol bei 50°C zirkuliert. Hierzu wurde eine Lösung aus 26 g Kaliumhexacyanocobaltat (0,078 mol) in 332 g destilliertem Wasser zudosiert. Der Druckverlust im Strahldispergator betrug dabei 2,5 bar. Anschließend wurde die gebildete Dispersion 60 min bei 50°C und einem Druckverlust im Strahldispergator von 2,5 bar zirkuliert. Danach wurde eine Mischung aus 5,7 g *tert*-Butanol, 159 g destilliertem Wasser und 27,6 g komplexbildende Komponente K-2 zudosiert und die Dispersion dann 80 min bei 50°C und einem Druckverlust im Strahldispergator von 2,5 bar zirkuliert.
230 g der erhaltenen Dispersion wurden in einer Drucknutsche mit 20 $cm^3$ Filterfläche filtriert und anschließend mit einer Mischung aus 82 g *tert*-Butanol, 42,3 g destilliertem Wasser und 1,7 g komplexbildende Komponente K-2 gewaschen. Der gewaschene Filterkuchen wurde mechanisch zwischen 2 Streifen Filterpapier abgepresst und abschließend für 2 h bei 60°C im Hochvakuum bei ca. 0,05 bar (absolut) getrocknet.

**Beispiel 3: Katalysator Cat-3**

Der Katalysator wurde mit einer Apparatur gemäß Fig. 4 aus WO-A 01/39883 hergestellt.
In einem Schlaufenreaktor, der einen Strahldispergator gemäß Fig. 2 aus WO-A 01/39883 mit einer Bohrung (Durchmesser 0,7 mm) enthält, wurde eine Lösung aus 258 g Zinkchlorid in 937 g destilliertem Wasser und 135 g *tert*-Butanol bei 50°C zirkuliert. Hierzu wurde eine Lösung aus 26 g Kaliumhexacyanocobaltat (0,078 mol) in 332 g destilliertem Wasser zudosiert. Der Druckverlust im Strahldispergator betrug dabei 2,5 bar. Anschließend wurde die gebildete Dispersion 60 min bei 50°C und einem Druckverlust im Strahldispergator von 2,5 bar zirkuliert. Danach wurde eine Mischung aus 5,7 g *tert*-Butanol, 159 g destilliertem Wasser und 27,6 g komplexbildende Komponente K-3 zudosiert und die Dispersion dann 80 min bei 50°C und einem Druckverlust im Strahldispergator von 2,5 bar zirkuliert.
230 g der erhaltenen Dispersion wurden in einer Drucknutsche mit 20 $cm^3$ Filterfläche filtriert und anschließend mit einer Mischung aus 82 g *tert*-Butanol, 42,3 g destilliertem Wasser und 1,7 g komplexbildende Komponente K-3 gewaschen. Der gewaschene Filterkuchen wurde mechanisch zwischen 2 Streifen Filterpapier abgepresst und abschließend für 2 h bei 60°C im Hochvakuum bei ca. 0,05 bar (absolut) getrocknet.

**Beispiel 4: Katalysator Cat-4**

Der Katalysator wurde mit einer Apparatur gemäß Fig. 4 aus WO-A 01/39883 hergestellt.
In einem Schlaufenreaktor, der einen Strahldispergator gemäß Fig. 2 aus WO-A 01/39883 mit einer Bohrung (Durchmesser 0,7 mm) enthält, wurde eine Lösung aus 258 g Zinkchlorid in 937 g destilliertem Wasser und 135 g *tert*-Butanol bei 50°C zirkuliert. Hierzu wurde eine Lösung aus 26 g Kaliumhexacyanocobaltat (0,078 mol) in 332 g destilliertem Wasser zudosiert. Der Druckverlust im Strahldispergator betrug dabei 2,5 bar. Anschließend wurde die gebildete Dispersion 60 min bei 50°C und einem Druckverlust im Strahldispergator von 2,5 bar zirkuliert. Danach wurde eine Mischung aus 5,7 g *tert*-Butanol, 159 g destilliertem Wasser und 27,6 g komplexbildende Komponente K-4 zudosiert und die Dispersion dann 80 min bei 50°C und einem Druckverlust im Strahldispergator von 2,5 bar zirkuliert.
230 g der erhaltenen Dispersion wurden in einer Drucknutsche mit 20 $cm^3$ Filterfläche filtriert und anschließend mit einer Mischung aus 82 g *tert*-Butanol, 42,3 g destilliertem Wasser und 1,7 g komplexbildende Komponente K-4 gewaschen. Der gewaschene Filterkuchen wurde mechanisch zwischen 2 Streifen Filterpapier abgepresst und abschließend für 2

h bei 60°C im Hochvakuum bei ca. 0,05 bar (absolut) getrocknet.

**Beispiel 5. Katalysator Cat-5**

Der Katalysator wurde mit einer Apparatur gemäß Fig. 4 aus WO-A 01/39883 hergestellt.
In einem Schlaufenreaktor, der einen Strahldispergator gemäß Fig. 2 aus WO-A 01/39883 mit einer Bohrung (Durchmesser 0,7 mm) enthält, wurde eine Lösung aus 258 g Zinkchlorid in 937 g destilliertem Wasser und 135 g *tert*-Butanol bei 50°C zirkuliert. Hierzu wurde eine Lösung aus 26 g Kaliumhexacyanocobaltat (0,078 mol) in 332 g destilliertem Wasser zudosiert. Der Druckverlust im Strahldispergator betrug dabei 2,5 bar. Anschließend wurde die gebildete Dispersion 60 min bei 50°C und einem Druckverlust im Strahldispergator von 2,5 bar zirkuliert. Danach wurde eine Mischung aus 5,7 g *tert*-Butanol, 159 g destilliertem Wasser und 27,6 g komplexbildende Komponente K-5 zudosiert und die Dispersion dann 80 min bei 50°C und einem Druckverlust im Strahldispergator von 2,5 bar zirkuliert.
230 g der erhaltenen Dispersion wurden in einer Drucknutsche mit 20 $cm^3$ Filterfläche filtriert und anschließend mit einer Mischung aus 82 g *tert*-Butanol, 42,3 g destilliertem Wasser und 1,7 g komplexbildende Komponente K-5 gewaschen. Der gewaschene Filterkuchen wurde mechanisch zwischen 2 Streifen Filterpapier abgepresst und abschließend für 2 h bei 60°C im Hochvakuum bei ca. 0,05 bar (absolut) getrocknet.

**Allgemeine Vorschrift zur Herstellung eines Polyethercarbonatpolyols:**

In einen 1L Druckreaktor mit Gasdosierungseinrichtung wurden 141 mg getrockneter DMC-Katalysator ausgewählt aus einem der Cat-1 bis Cat-5 (siehe Tabelle 1) sowie 51 g getrocknetes 1,8-Octandiol (Starter) vorgelegt. Der Reaktor wurde auf 130 °C aufgeheizt und durch wiederholtes Beaufschlagen von Stickstoff auf ca. 5 bar und nachfolgendes Entspannen auf ca. 1 bar inertisiert. Dieser Vorgang wurde 3-mal durchgeführt. In den Reaktor wurden bei 130 °C und Abwesenheit von $CO_2$, also Null bar $CO_2$, 25 g Propylenoxid (PO) eindosiert. Das Anspringen der Reaktion machte sich durch eine Temperaturspitze ("Hotspot") und durch Druckabfall auf den Ausgangsdruck (ca. 1 bar) bemerkbar. Nach dem ersten Druckabfall wurden 20 g PO und dann 19 g PO schnell eindosiert, wodurch es wiederum jeweils zu einer Temperaturspitze und zu einem Druckabfall kam. Nachdem der Reaktor mit 50 bar $CO_2$ beaufschlagt worden war, wurden 50 g PO schnell eindosiert, wodurch es nach einer Wartezeit **[Zeit 1]** zu einer Temperaturspitze kam. Ab diesem Zeitpunkt der Temperaturspitze tendierte der Gesamtdruck im Reaktor zu einer Abnahme. Der Druck im Reaktor wurde so geregelt, dass durch regelmäßiges Zudosieren an $CO_2$ der Druck konstant bei dem oben angegebenen Druck 1 gehalten wurde. Nach der erfolgten Aktivierung wurde das restliche Propylenoxid (435 g) kontinuierlich mit ca. 1,8 g/min in den Reaktor gepumpt, während in Schritten von 5°C pro fünf Minuten die Temperatur auf 105 °C gesenkt wurde. Nach beendeter PO-Zugabe wurde noch 60 Minuten bei 105 °C und dem Druck von 50 bar weitergerührt (1500 U/min). Die Zusammensetzung des jeweils erhaltenen Reaktionsgemisches ist in Tabelle 1 angegeben.

Aus der Tabelle 1 ist ersichtlich, dass in der Herstellung von Polyethercarbonatpolyolen aus einer H-funktionellen Startsubstanz, Propylenoxid und Kohlendioxid die Selektivität zugunsten des linearen Produkts verbessert wird, wenn ein DMC-Katalysator eingesetzt wird, der eine komplexbildende Komponente im Sinne der vorliegenden Erfindung enthält.

Tabelle 1: Resultate der Polyethercarbonatpolyol-Herstellung

| Beispiel | Katalysator | Zeit 1 [min] | $CO_2$-Einbau [Gew-.%] | Selektivität cyclisch / linear | OH-Zahl [mg KOH / g] |
|---|---|---|---|---|---|
| **6*** | Cat-1 | 33 | 19,9 | 0,21 | 67,2 |
| **7** | Cat-2 | 70 | 20,2 | 0,16 | 67,0 |
| **8** | Cat-3 | 90 | 19,6 | 0,18 | 66,5 |
| **9** | Cat-4 | 110 | 20,3 | 0,13 | 66,9 |
| **10** | Cat-5 | 63 | 20,2 | 0,16 | 65,0 |
| * = Vergleichsbeispiel | | | | | |

**Patentansprüche**

1. Verfahren zur Herstellung von Polyethercarbonatpolyolen aus einer oder mehreren H-funktionellen Startsubstanzen, eines oder mehrerer Alkylenoxiden und Kohlendioxid in Gegenwart eines DMC-Katalysators, **dadurch gekenn-**

**zeichnet, dass** der DMC-Katalysator mindestens eine komplexbildende Komponente ausgewählt aus der Gruppe bestehend aus Polycarbonatdiol, Polyethercarbonatpolyol, Polyethylenglykoldiol und Poly(tetramethylenetherdiol) enthält.

**2.** Verfahren gemäß Anspruch 1, **dadurch gekennzeichnet, dass**

(α) die H-funktionelle Startersubstanz oder ein Gemisch aus mindestens zwei H-funktionellen Startersubstanzen vorgelegt werden,
(β) zur Aktivierung eine Teilmenge (bezogen auf die Gesamtmenge der in den Schritten (β) und (γ) eingesetzten Menge an Alkylenoxiden) von einem oder mehreren Alkylenoxiden zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,
(γ) ein oder mehrere Alkylenoxide und Kohlendioxid zu der aus Schritt (β) resultierenden Mischung zugesetzt werden, wobei die in Schritt (γ) eingesetzten Alkylenoxide gleich oder verschieden sein können von den bei Schritt (β) eingesetzten Alkylenoxiden.

**3.** Verfahren gemäß Anspruch 1 oder 2, **dadurch gekennzeichnet, dass** der DMC-Katalysator als komplexbildende Komponente Poly(tetramethylenetherdiol) mit einer Molmasse von 500 bis 5000 g/mol enthält.

**4.** Verfahren gemäß Anspruch 1 oder 2, **dadurch gekennzeichnet, dass** der DMC-Katalysator als komplexbildende Komponente Polyethylenglykoldiol mit einer Molmasse von 500 bis 2500 g/mol enthält.

**5.** Verfahren gemäß Anspruch 1 oder 2, **dadurch gekennzeichnet, dass** der DMC-Katalysator als komplexbildende Komponente Polyethercarbonatpolyol mit einer Molmasse von 500 bis 5000 g/mol enthält.

**6.** Verfahren gemäß Anspruch 1 oder 2, **dadurch gekennzeichnet, dass** der DMC-Katalysator als komplexbildende Komponente Polyethercarbonatpolyol mit einer Molmasse von 1000 bis 3000 g/mol enthält.

**7.** Verfahren gemäß Anspruch 1 oder 2, **dadurch gekennzeichnet, dass** der DMC-Katalysator als komplexbildende Komponente Polycarbonatdiol mit einer Molmasse von 500 bis 5000 g/mol enthält.

**8.** Verfahren gemäß einem der Ansprüche 1 bis 7, wobei der eingesetzte DMC-Katalysatoren erhalten wird, indem man

(a) im ersten Schritt eine wässrige Lösung eines Metallsalzes mit der wässrigen Lösung eines Metallcyanidsalzes in Gegenwart eines oder mehrer organischen Komplexliganden umsetzt,
(b) wobei im zweiten Schritt der Feststoff aus der aus (i) erhaltenen Suspension durch bekannte Techniken abgetrennt wird,
(c) wobei gegebenenfalls in einem dritten Schritt der isolierte Feststoff mit einer wässrigen Lösung eines organischen Komplexliganden gewaschen wird,
(d) wobei anschließend der erhaltene Feststoff bei Temperaturen von 20 - 120°C und bei Drücken von 0,1 mbar bis 1013 mbar getrocknet wird,

**dadurch gekennzeichnet, dass** im ersten Schritt oder unmittelbar nach der Ausfällung der Doppelmetallcyanidverbindung (zweiter Schritt) ein oder mehrere organische Komplexliganden und mindestens eine komplexbildende Komponente zugesetzt werden, **dadurch gekennzeichnet, dass** die komplexbildende Komponente ausgewählt ist aus mindestens einer der Gruppe bestehend aus Polycarbonatdiol, Polyethercarbonatpolyol, Polyethylenglykoldiol und Poly(tetramethylenetherdiol).

Europäisches Patentamt
European Patent Office
Office européen des brevets

# EUROPÄISCHER RECHERCHENBERICHT

Nummer der Anmeldung
EP 11 17 4406

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y<br><br>A | US 2003/149232 A1 (HINZ WERNER [US] ET AL) 7. August 2003 (2003-08-07)<br>* Ansprüche 1-20 *<br>* Beispiele *<br>* Absätze [0007] - [0010], [0023] - [0023] * | 1,2,5,6,<br>8<br>3,4,7 | INV.<br>C08G65/00<br>C08G64/00 |
| Y<br><br>A | EP 2 287 226 A1 (BAYER MATERIALSCIENCE LLC [US]) 23. Februar 2011 (2011-02-23)<br>* Ansprüche 1-10 *<br>* Beispiele *<br>* Absätze [0019] - [0020] * | 1,2,5,6,<br>8<br>3,4,7 | |
| Y<br><br><br>A | WO 99/19063 A1 (BAYER AG [DE]; HOFMANN JOERG [DE]; GUPTA PRAMOD [DE]; KUMPF ROBERT JOS) 22. April 1999 (1999-04-22)<br>* Ansprüche 10,20 *<br>* Seite 6 - Seite 8 *<br>* Seite 8, Zeile 6 - Zeile 14 * | 1,2,5,6,<br>8<br><br>3,4,7 | |
| | | | RECHERCHIERTE SACHGEBIETE (IPC) |
| | | | C08G |

Der vorliegende Recherchenbericht wurde für alle Patentansprüche erstellt

1

| Recherchenort | Abschlußdatum der Recherche | Prüfer |
|---|---|---|
| München | 29. September 2011 | Kositza, Matthias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 11 17 4406

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-09-2011

| Im Recherchenbericht angeführtes Patentdokument | Datum der Veröffentlichung | Mitglied(er) der Patentfamilie | Datum der Veröffentlichung |
|---|---|---|---|
| US 2003149232 A1 | 07-08-2003 | CA 2418435 A1 | 04-08-2003 |
| | | MX PA03001009 A | 07-12-2004 |
| EP 2287226 A1 | 23-02-2011 | CN 101511909 A | 19-08-2009 |
| | | EP 2046861 A1 | 15-04-2009 |
| | | EP 2239291 A1 | 13-10-2010 |
| | | JP 2009544801 A | 17-12-2009 |
| | | KR 20090032086 A | 31-03-2009 |
| | | US 2008021154 A1 | 24-01-2008 |
| | | US 2010331517 A1 | 30-12-2010 |
| | | WO 2008013731 A1 | 31-01-2008 |
| WO 9919063 A1 | 22-04-1999 | AU 9542598 A | 03-05-1999 |
| | | BR 9813034 A | 15-08-2000 |
| | | CA 2306378 A1 | 22-04-1999 |
| | | CN 1275929 A | 06-12-2000 |
| | | EP 1034035 A1 | 13-09-2000 |
| | | ES 2201537 T3 | 16-03-2004 |
| | | ID 24172 A | 13-07-2000 |
| | | JP 2001519468 A | 23-10-2001 |
| | | US 6323375 B1 | 27-11-2001 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4500704 A
- US 6762278 B2
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- EP 292772 A
- WO 0139883 A
- WO 0180994 A
- EP 355000 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- Methoden der organischen Chemie. **HOUBEN-WEYL.** Makromolekulare Stoffe. 1963, vol. 14/2, 425-453
- Methoden der organischen Chemie. **HOUBEN-WEYL.** Makromolekulare Stoffe. 1987, vol. E20, 1367-1368
- Encyclopedia of Polymer Science and Engineering. 1987, vol. 6, 225-230234-254
- Methoden der organischen Chemie. **HOUBEN-WEYL.** Makromolekulare Stoffe. 1987, vol. E20, 1443-1457
- Ullmann’s Encyclopedia of Industrial Chemistry. 1992, vol. A21, 207-215
- Encyclopedia of Polymer Science and Engineering. 1988, vol. 11, 648-718
- Kunststoff-Handbuch. Carl-Hanser-Verlag, 1993, vol. VII, 139-265